# EUROPÄISCHE PATENTANMELDUNG

(11) **EP 2 269 867 A1**
(43) Veröffentlichungstag der Anmeldung: **05.01.2011**
(21) Anmeldenummer: 09008625.7
(22) Anmeldetag: 01.07.2009
(51) Int. Cl.: B60N 3/10, F25D 31/00

(54) **Fahrzeug mit Klimatisierungsanlage und Getränkehalter**

(71) Anmelder: Einstein, Gabriel, Libreville (GA)
(72) Erfinder: Einstein, Gabriel, Libreville (GA)
(74) Vertreter: Söltenfuss, Dirk Christian

(57) **Zusammenfassung**

Ein Fahrzeug, weist eine Klimatisierungsanlage zum Klimatisieren eines Fahrgastraums (10) des Fahrzeugs und wenigstens einen in der Innenverkleidung (12-16) des Fahrgastraums (10) integrierten Getränkehalter (18) mit einer durch eine Seitenwandung (24) und eine Bodenwandung (26) begrenzten Ausnehmung (20), in welcher ein Standardgetränkebehälter (22) zumindest teilweise aufgenommen werden kann, auf. In der Seitenwandung (24) und/oder der Bodenwandung (26) des Getränkehalters (18) ist ein im Wesentlichen spiral- oder schneckenförmig verlaufender Medienkanal (28) ausgebildet ist und eine Innenseite (23) des Getränkehalters (18) ist zumindest teilweise aus einem wärmeleitenden Material gebildet, während eine der Innenseite (18) abgewandte Seite des Getränkehalters zumindest teilweise wärmeisolierend (34) ausgebildet ist. Weiter ist ein Ende des Medienkanals (28) mit einer Zuleitung (30) zum Zuführen eines Wärmetauschmediums zu dem Medienkanal verbunden und ist ein anderes Ende des Medienkanals (28) mit einer Ableitung (32) zum Abführen des Wärmetauschmediums aus dem Medienkanal verbunden. Eine Steuervorrichtung (48; 48a, 48b; 66; 80) steuert den Fluss des Wärmetauschmediums durch den Medienkanal (28), wobei die Zuleitung (30) und die Ableitung (32) mit der Klimatisierungsanlage des Fahrzeugs gekoppelt sind.

## Beschreibung

Die vorliegende Erfindung betrifft ein Fahrzeug mit einer Klimatisierungsanlage zum Klimatisieren eines Fahrgastraums des Fahrzeugs und wenigstens einem in der Innenverkleidung des Fahrgastraums integrierten Getränkehalter.

Moderne Kraftfahrzeuge sind im Allgemeinen mit einer Klimatisierungsanlage zum Klimatisieren des Fahrgastraums versehen. Außerdem sind in der Innenverkleidung des Fahrgastraums häufig Getränkehalter in Form von Ausnehmungen, in welchen ein Getränkebehälter zumindest teilweise aufgenommen, d.h. eingestellt werden kann, angeordnet. Seitens der Fahrgäste besteht dabei das Bedürfnis, wohltemperierte Getränke zu sich zu nehmen. Aus dem Stand der Technik sind verschiedene Maßnahmen zum Temperieren von Getränkebehältern im Fahrgastraum eines Kraftfahrzeugs bekannt.

Zum Beispiel offenbaren die DE 100 23 476 A1 und die DE 197 49 366 A1 jeweils einen Getränkehalter für ein Kraftfahrzeug, der eine elektrische Temperiereinrichtung beispielsweise mit einem Peltier-Element aufweist, welche an das Kraftfahrzeug-Bordnetz angeschlossen werden kann.

Weiter sind verschiedene Getränkehalter bekannt, die in einem Luftstrom angeordnet sind, welcher von der Klimatisierungsanlage des Fahrzeugs zur Verfügung gestellt wird. Es sei hier beispielhaft auf die Druckschriften DE 102 54 707 A1, DE 202 15 882 U1 und DE 202 16 677 U1 verwiesen. Im Fall der DE 37 39 151 A1 ist eine derartige Kühlbox im Handschuhfach untergebracht, bei der DE 103 09 610 A1 befindet sich die entsprechende Kühlkammer im Armaturenbrett in der Nähe des Verdampfers.

Die DE 89 12 320 U1 beschreibt eine separate Temperierbox für Getränke, die im Bereich des Armaturenbretts oder der Mittelkonsole eines Kraftfahrzeugs installiert werden kann und welche ein Peltier-Element zum Temperieren des Luftstroms sowie einen lonisator zum Verbessern der Luftqualität im Fahrgastraum aufweist.

In der DE 37 40 350 A1 ist ein Kühlmantel zum Aufnehmen einer Standardgetränkedose oder -flasche gezeigt, durch dessen Hohlraum ein Kältemittel der Kraftfahrzeug-Klimatisierungsanlage geleitet wird. Der Mantel weist einen Spalt parallel zu seiner Längsachse auf, sodass sich der Mantel durch das durch ihn strömende kühle Kältemittel zusammenzieht und an den Getränkebehälter anlegt. Der Kühlmantel ist ferner mit einem Ein-Schalter sowie mit einem Thermostat oder einem Zeitgeber zum automatischen Beenden des Kühlvorgangs ausgestattet.

Der Erfindung liegt die Aufgabe zugrunde, ein verbessertes Fahrzeug mit einer Klimatisierungsanlage und einem Getränkehalter zu schaffen, dessen Getränkehalter ein effektives Temperieren eines darin aufgenommenen Getränkebehälters ermöglicht.

Diese Aufgabe wird gelöst durch ein Fahrzeug mit den Merkmalen des Anspruchs 1. Vorteilhafte Ausgestaltungen und Weiterbildungen der Erfindung sind Gegenstand der abhängigen Ansprüche.

Das Fahrzeug hat eine Klimatisierungsanlage zum Klimatisieren seines Fahrgastraums und wenigstens einen in der Innenverkleidung des Fahrgastraums integrierten Getränkehalter mit einer durch eine Seitenwandung und eine Bodenwandung begrenzten Ausnehmung, in welcher ein Standardgetränkebehälter zumindest teilweise aufgenommen werden kann. Dieses Fahrzeug ist erfindungsgemäß **dadurch gekennzeichnet, dass** in der Seitenwandung und/oder der Bodenwandung des Getränkehalters ein im Wesentlichen spiral- oder schneckenförmig verlaufender Medienkanal ausgebildet ist; eine Innenseite des Getränkehalters zumindest teilweise aus einem wärmeleitenden Material gebildet ist und eine der Innenseite abgewandte Seite des Getränkehalters zumindest teilweise wärmeisolierend ausgebildet ist; ein Ende des Medienkanals mit einer Zuleitung zum Zuführen eines Wärmetauschmediums zu dem Medienkanal verbunden ist und ein anderes Ende des Medienkanals mit einer Ableitung zum Abführen des Wärmetauschmediums aus dem Medienkanal verbunden ist; eine Steuervorrichtung zum Steuern des Flusses des Wärmetauschmediums durch den Medienkanal vorgesehen ist; und die Zuleitung und die Ableitung mit der Klimatisierungsanlage des Fahrzeugs gekoppelt sind.

Die Getränkehalter werden durch Ausnehmungen gebildet, die in der Innenverkleidung des Fahrgastraums integriert sind. Auf diese Weise können die Getränkehalter an für die Fahrgäste praktischen und bequem erreichbaren Positionen im Fahrgastraum angeordnet werden. Außerdem ist es möglich, den Fahrgastraum für den Benutzer unverändert zu lassen, da die ohnehin in der Innenverkleidung vorgesehenen Ausnehmungen für die erfindungsgemäß ausgestalteten Getränkehalter verwendet werden.

Das Wärmetauschmedium durchströmt die Wandung des Getränkehalters und ist mit der Klimatisierungsanlage des Fahrzeugs gekoppelt. Hierdurch ist ein sehr effektives Temperieren eines Getränkebehälters im Getränkehalter mittels des Wärmetauschmediums möglich, da die Kapazität der Klimatisierungsanlage für eine solche Temperierung des Getränkebehälters im Allgemeinen ausreichend ist.

Der spiral- oder schneckenförmig verlaufende Medienkanal sowie seine Wärmedämmung ermöglichen einen sehr effektiven und gerichteten Temperiervorgang ohne Wärmeenergieverlust.

Ein "Fahrgastraum" im Sinne dieser Anmeldung ist ein offener oder geschlossener Raum, in dem sich wenigstens ein Fahrgast (Fahrer, Beifahrer, Passagier, etc.) aufhalten kann.

Unter dem Begriff des "Standardgetränkebehälters" sollen alle Getränkebehälter in Form von Dosen, Flaschen, Bechern und dergleichen verstanden werden, die eine übliche Dimension in der Größenordnung der Standardblechdosen haben. Die in Europa am weitesten verbreiteten Getränkedosen haben ein Fassungsvolumen von 330 ml oder 500 ml und dabei einen Durchmesser von 67 mm und eine Höhe von 115 mm bzw. 168 mm. Energydrinks sind häufig auch in kleineren Dosen erhältlich. Je nach geographischem Anwendungsgebiet der vorliegenden Erfindung können die Abmessungen der Getränkehalter-Ausnehmung an die lokalen Gepflogenheiten angepasst werden, sodass eine möglichst umfassende Nutzung für den Fahrgast möglich ist.

Das "wärmeleitende" Material der Innenseite des Getränkehalters ist allgemein derart gewählt, dass eine möglichst gute Übertragung der Wärmeenergie des Wärmetauschmediums im Innern des Medienkanals auf den Getränkebehälter in der Ausnehmung des Getränkehalters erfolgt. Die "wärmeisolierende" Ausbildung der der Innenseite abgewandten Seite des Getränkebehälters soll einen Verlust von thermischer Energie (Kälte oder Wärme) an die Umgebung oder benachbarte Komponenten außer dem zu temperierenden Getränkebehälter möglichst verhindern bzw. minimieren.

Die Erfindung ist grundsätzlich für alle Arten von "Fahrzeugen" einsetzbar. Dies gilt insbesondere für Kraftfahrzeuge wie Personenkraftwagen, Lastkraftwagen auf der Straße, Schienenfahrzeuge, Wasserfahrzeuge und Luftfahrzeuge.

In einer Ausgestaltung der Erfindung ist das Wärmetauschmedium ein Kältemittel eines Kältemittelkreislaufs der Klimatisierungsanlage des Fahrzeugs.

In einer anderen Ausgestaltung der Erfindung ist das Wärmetauschmedium ein durch die Klimatisierungsanlage des Fahrzeugs temperiertes Fluid wie beispielsweise die in den Fahrgastraum auszublasende Luft.

In einer noch anderen Ausgestaltung der Erfindung ist in Strömungsrichtung des Wärmetauschmediums zwischen der Zuleitung und der Ableitung ein Wärmetauscher vorgesehen, der mit der Klimatisierungsanlage des Fahrzeugs gekoppelt ist, und das Wärmetauschmedium ist ein Fluid, welches in einem geschlossenen Kreislauf bestehend aus der Zuleitung, dem Medienkanal, der Ableitung und dem Wärmetauscher strömt.

Ferner besteht die Möglichkeit, dass der Getränkehalter mit einem ersten Medienkanal für ein kühlendes Wärmetauschmedium (z.B. Kältemittel der Klimatisierungsanlage) und einem zweiten Medienkanal für ein heizendes Wärmetauschmedium (z.B. Motorkühlwasser) versehen ist und die Steuervorrichtung zum Steuern des Flusses des kühlenden Wärmetauschmediums durch den ersten Medienkanal und zum Steuern des Flusses des heizenden Wärmetauschmediums durch den zweiten Medienkanal ausgebildet ist.

Die Kapazität der Fahrzeug-Klimatisierungsanlage ist im Allgemeinen ausreichend, um auch einen oder mehrere Getränkehalter zu versorgen. Beim Nutzen des Kältemittels, der klimatisierten Luft oder nur der thermischen Energie des Kältemittels nach einem der vier vorbeschriebenen Ausgestaltungsmöglichkeiten wird der Gesamtenergiebedarf daher nicht oder allenfalls unwesentlich erhöht.

In weiterer Ausgestaltung der Erfindung kann der Getränkehalter mit einer Bedieneinheit versehen sein, welche wenigstens ein Eingabeelement zum Eingeben einer Solltemperatur für einen in der Ausnehmung des Getränkehalters aufgenommenen Getränkebehälter aufweist. Über eine solche Bedieneinheit kann der Fahrgast eine von ihm gewünschte Temperatur bzw. einen von ihm gewünschten Temperaturbereich für den Getränkebehälter in der Ausnehmung des Getränkehalters einstellen.

Weiter kann der Getränkehalter mit einer Temperaturerfassungsvorrichtung zum Erfassen einer Temperatur eines in der Ausnehmung aufgenommenen Getränkebehälters versehen sein. Durch diese Maßnahme kann das Temperieren des Getränkebehälters in der Ausnehmung des Getränkehalters genauer entsprechend den Wünschen des Fahrgastes erfolgen.

In einer noch weiteren Ausgestaltung der Erfindung ist der Getränkehalter mit einer Getränkebehältererfassungsvorrichtung zum Erfassen eines Vorhandenseins eines Getränkebehälters in der Ausnehmung des Getränkehalters versehen. Durch eine solche Getränkebehältererfassungsvorrichtung kann sichergestellt werden, dass der Getränkebehälter nur dann einen Temperiervorgang ausführt, wenn in seiner Ausnehmung ein zu temperierender Getränkebehälter aufgenommen ist. Hierdurch können eine Fehlbedienung / ein Missbrauch des Getränkehalters vermieden und ein Energieverbrauch gesenkt werden.

Außerdem kann der Getränkehalter mit einer Bedieneinheit versehen sein, welche wenigstens ein Anzeigeelement zum Anzeigen einer Isttemperatur (bzw. eines Isttemperaturbereichs) eines Getränkebehälters in der Ausnehmung, einer Solltemperatur für einen Getränkebehälter in der Ausnehmung und/oder eines Erreichens einer Solltemperatur durch einen Getränkebehälter in der Ausnehmung aufweist. Mit Hilfe einer solchen Bedieneinheit kann die Benutzung des Getränkebehälters für den Fahrgast komfortabel gestaltet werden.

Zur Erweiterung der Anwendungsmöglichkeiten des Getränkebehälters kann in der Zuleitung eine Heizvorrichtung zum Heizen des Wärmetauschmediums angeordnet sein. Auf diese Weise lassen sich die gewünschten Solltemperaturen für den Getränkebehälter in weiten Bereichen einstellen und es kann auch wahlweise ein Kühlen oder ein Heizen des Getränkebehälters möglich sein. Zusätzlich oder alternativ kann der Getränkehalter zu diesem Zweck auch mit einer elektrischen Heizvorrichtung (z.B. im Bereich seiner Bodenwandung) versehen sein.

In einer Ausgestaltung der Erfindung ist der Getränkehalter mit einer Bedieneinheit versehen, welche wenigstens eine Betriebsanzeige zum Anzeigen eines aktuellen Betriebszustandes (z.B. Ein/Aus, Heizen/Kühlen, etc.) des Getränkehalters aufweist.

Zur Verbesserung der Effektivität des Getränkehalters können ferner die Zuleitung und/oder die Ableitung wärmeisoliert ausgebildet sein, um Verluste von thermischer Energie zu vermeiden bzw. zu minimieren.

Zum gleichen Zweck kann zusätzlich oder alternativ auch die der Innenseite abgewandte Seite des Getränkehalters im Wesentlichen vollständig wärmeisolierend ausgebildet werden. Die wärmeisolierende Ausbildung wird zum Beispiel durch die Ausbildung aus einem wärmeisolierenden Material oder durch das Vorsehen einer Wärmedämmung realisiert.

In einer weiteren Ausgestaltung kann der Getränkehalter einen Einsatz aus einem wärmeleitenden Material aufweisen, der in die Ausnehmung einsetzbar ist, um den Innenraum zum Aufnehmen eines zu temperierenden Getränkebehälters zu verkleinern. Der Einsatz ist zum Beispiel im Wesentlichen hohlzylindrisch ausgebildet und sein Außendurchmesser entspricht im Wesentlichen dem Innendurchmesser der Ausnehmung des Getränkehalters.

Schließlich kann der Getränkehalter auch eine Verschlussvorrichtung zum Beispiel in Form eines Deckels aufweisen, der wärmeisolierend ausgebildet ist und mit dem die Ausnehmung verschlossen werden kann. Bei geschlossenem Getränkehalter ist dieser zum Lagern von Lebensmitteln, Getränken, Arzneimitteln und dergleichen bei im Wesentlichen konstanter Temperatur(bereich) über einen längeren Zeitraum ohne großen Energiebedarf geeignet.

Obige sowie weitere Merkmale, Vorteile und Anwendungsmöglichkeiten der Erfindung werden aus der nachfolgenden Beschreibung bevorzugter, nicht-einschränkender Ausführungsbeispiele unter Bezugnahme auf die beiliegenden Zeichnungen besser verständlich. Darin zeigen:
- Fig. 1: eine schematische Darstellung eines Kraftfahrzeug-Fahrgastraums;
- Fig. 2A: eine schematische Schnittansicht eines Getränkehalters gemäß einem ersten Ausführungsbeispiel der Erfindung;
- Fig. 2B: eine schematische Draufsicht des Getränkehalters von Fig. 2B;
- Fig. 3: eine schematische Darstellung der Kopplung des Getränkehalters mit der Klimatisierungsanlage gemäß einem ersten Ausführungsbeispiel der vor- liegenden Erfindung;
- Fig. 4: eine schematische Darstellung der Kopplung des Getränkehalters mit der Klimatisierungsanlage gemäß einem zweiten Ausführungsbeispiel der vor- liegenden Erfindung;
- Fig. 5: eine schematische Darstellung der Kopplung des Getränkehalters mit der Klimatisierungsanlage gemäß einem dritten Ausführungsbeispiel der vor- liegenden Erfindung;
- Fig. 6: eine schematische Darstellung der Kopplung des Getränkehalters mit der Klimatisierungsanlage gemäß einem vierten Ausführungsbeispiel der vor- liegenden Erfindung;
- Fig. 7: eine schematische Darstellung der Kopplung des Getränkehalters mit der Klimatisierungsanlage gemäß einem fünften Ausführungsbeispiel der vor- liegenden Erfindung;
- Fig.8: eine schematische Schnittansicht eines Getränkehalters gemäß einem weiteren Ausführungsbeispiel der Erfindung;
- Fig. 9: eine schematische Darstellung der Kopplung eines noch weiteren Getränke- halters mit der Klimatisierungsanlage gemäß einem sechsten Ausführungs- beispiel der vorliegenden Erfindung; und
- Fig. 10: eine schematische Schnittansicht eines Getränkehalters, die zwei weitere Ausführungsvarianten der Erfindung zeigt.

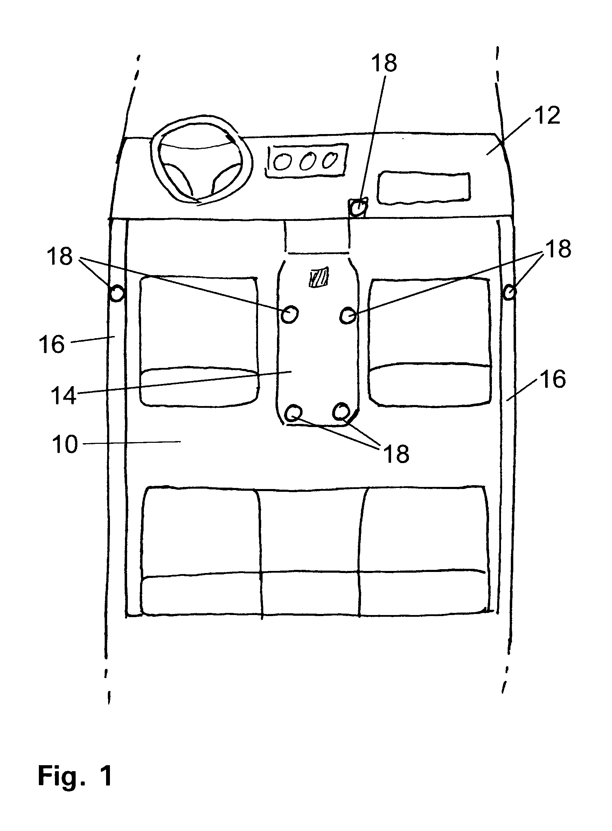

In Fig. 1 ist zunächst stark schematisiert ein Fahrgastraum 10 eines Fahrzeugs wie beispielsweise eines Personenkraftwagens veranschaulicht. In Fahrtrichtung vorne (oben in Fig. 1) befindet sich vor dem Fahrersitz und dem Beifahrersitz in üblicher Weise ein Armaturenbrett 12. Zwischen Fahrersitz und Beifahrersitz kann eine Mittelkonsole 14 angeordnet sein. Die Fahrzeugtüren sind auf ihrer dem Fahrgastraum 10 zugewandten Seite mit einer Türinnenverkleidung 16 versehen. Die genannten Komponenten Armaturenbrett 12, Mittelkonsole 14 und Türinnenverkleidung 16 sind jeweils Teile der Innenverkleidung des Fahrgastraums des Fahrzeugs im Sinne der Erfindung. Der Begriff der "Innenverkleidung" ist dabei aber nicht nur auf die hier ausdrücklich genannten und in Fig. 1 dargestellten Komponenten beschränkt.

In Fig. 1 sind außerdem verschiedene Positionierungsmöglichkeiten skizziert, wo in dem Fahrgastraum 10 jeweils ein Getränkehalter 18 in der Innenverkleidung 12-16 integriert sein kann. So kann ein Getränkehalter 18 zum Beispiel in der Türinnenverkleidung 16 neben dem Fahrersitz und/oder Beifahrersitz oder auch im Bereich der Rücksitze, im Armaturenbrett 12 vor dem Beifahrersitz und/oder in der Mittelkonsole an für den Fahrer, den Beifahrer bzw. den Fahrgästen auf den Rücksitzen erreichbaren Positionen vorgesehen sein. Der Fachmann wird problemlos weitere geeignete Stellen für einen Getränkehalter 18 erkennen. Die Positionen der Getränkehalter 18 können auch je nach Fahrzeugtyp und Fahrzeugausstattung unterschiedlich sein.

Gemäß der vorliegenden Erfindung ist ein Getränkehalter 18 im Wesentlichen durch eine Ausnehmung 20 gebildet, die durch eine Seitenwandung 24 und eine Bodenwandung 26 begrenzt ist und zur zumindest teilweisen Aufnahme eines Standardgetränkebehälters 22 geeignet ist. Derartige Ausnehmung sind auch in herkömmlichen Fahrzeugen an unterschiedlichen Positionen bereits in der Innenverkleidung 12-16 des Fahrgastraums 10 integriert und können in vorteilhafter Weise für den erfindungsgemäß ausgestalteten Getränkehalter 18 genutzt werden, ohne das Aussehen des Fahrgastraums 10 für die Fahrgäste entscheidend zu verändern.

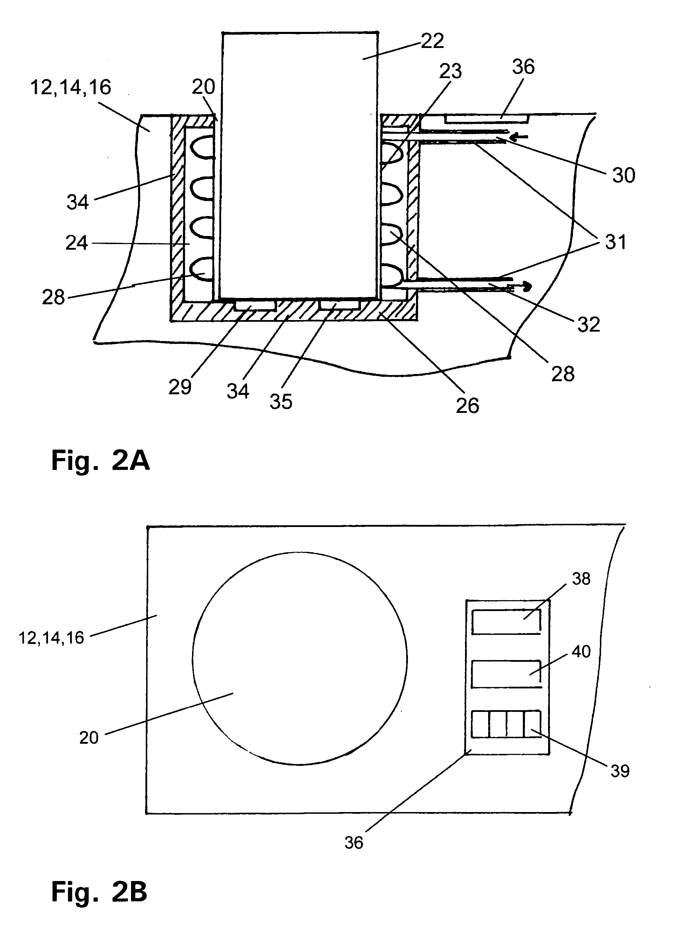

Der Aufbau eines Getränkehalters 18 gemäß einem Ausführungsbeispiel der Erfindung ist in Fig. 2A und 2B im Detail dargestellt.

Die Ausnehmung 20 des Getränkehalters 18 ist durch die Seitenwandung 24 und die Bodenwandung 26 begrenzt und zum Aufnehmen eines Standardgetränkebehälters 22 in Form einer Dose, einer Flasche, eines Bechers oder dergleichen ausgestaltet und dimensioniert.

In der Seitenwandung 24 der Ausnehmung ist ein Medienkanal 28 ausgebildet, der im Wesentlichen spiralförmig um die Ausnehmung 20 herum verläuft. Alternativ oder zusätzlich kann der Medienkanal 28 auch im Wesentlichen schneckenförmig verlaufend in der Bodenwandung 26 ausgebildet sein.

Die sprialförmige bzw. schneckenförmige Ausbildung des Medienkanals 28 führt zu einem besonders effektiven Wärmeaustausch mit dem in der Ausnehmung 20 aufgenommenen Getränkebehälter 22. Aufgrund der verlängerten Wegstrecke des Medienkanals ist auch die Wärmetauschstrecke entsprechend ausgedehnt.

Der Medienkanal 28 ist mit einer Zuleitung 30 zum Zuführen eines Wärmetauschmediums in den Medienkanal 28 und mit einer Ableitung 32 zum Abführen des Wärmetauschmediums aus dem Medienkanal 28 verbunden. Die Zuleitung 30 und die Ableitung 32 sind mit der Klimatisierungsanlage des Fahrzeugs gekoppelt, wie dies weiter unten anhand verschiedener Ausführungsformen näher erläutert werden wird.

Zum Gewährleisten eines guten Wärmeaustausches zwischen dem Wärmetauschmedium und einem in der Ausnehmung 20 stehenden Getränkebehälter 22 ist einerseits der Medienkanal 28 aus einem wärmeleitenden Material ausgebildet und ist andererseits die Innenseite 23 der Seitenwandung 24 zumindest teilweise aus einem wärmeleitenden Material gebildet. Um einen effektiven und gerichteten Wärmeaustausch zu erzielen ist außerdem die der Innenseite 23 abgewandte Seite der Ausnehmung zumindest teilweise, vorzugsweise vollständig wärmeisolierend ausgebildet. In der Ausführungsform von Fig. 2 wird dies durch eine auf die Seitenwandung 24 und die Bodenwandung 26 aufgebrachte Wärmedämmung 34 erzielt.

Um einen unerwünschten Wärmeaustausch zwischen dem Medienkanal 28 und der Umgebung des Getränkehalters 18 zu vermeiden bzw. zu minimieren und auch einen direkten Kontakt eines Benutzers mit der temperierten Innenseite 23 der Ausnehmung 20 zu verhindern bzw. zu erschweren (um z.B. Verletzung durch Hitze oder Kälte zu vermeiden) ist die Seitenwandung 26 auch auf ihrer dem Benutzer zugewandten Oberseite (oben in Fig. 2A) mit der Wärmedämmung 34 versehen und erstreckt sich die Wärmetauschfläche auf der Innenseite vorzugsweise nicht ganz bis zum oberen Ende der Ausnehmung.

Die Zuleitung 30 und/oder die Ableitung 32 sind bevorzugt ebenfalls mit einer Wärmedämmung 31 versehen bzw. ausgebildet. Hierdurch kann der Wärmeaustausch des Wärmetauschmediums auf den Bereich des Medienkanals 28 begrenzt werden.

Wie in Fig. 2A und 2B dargestellt, weist der Getränkehalter 18 bevorzugt auch eine Bedieneinheit 36 auf, die zum Beispiel in der Nähe der Ausnehmung 20 angeordnet ist. Alternativ kann auch eine zentrale Bedieneinheit für mehrere Getränkehalter 18 im Fahrgastraum vorgesehen sein.

Diese Bedieneinheit 36 ist in dem Beispiel von Fig. 2B mit einer Betriebsanzeige 38, einem Eingabeelement 39 und einer Temperaturanzeige 40 ausgestattet. Über das Eingabeelement 39 kann der Benutzer einen Temperiervorgang des Getränkehalters 18 einschalten, einen solchen ausschalten, eine gewünschte Solltemperatur für den eingestellten Getränkebehälter 22 einstellen, zwischen einem Heizvorgang und einem Kühlvorgang auswählen und dergleichen. Die Betriebsanzeige 38 zeigt dem Benutzer zum Beispiel den Betrieb des Getränkehalters 18 (d.h. einen laufenden Temperiervorgang), die Art des Temperiervorgangs (d.h. Kühlen oder Heizen) und dergleichen an. Mit der Temperaturanzeige 40 kann dem Benutzer zum Beispiel die Isttemperatur des Getränkehalters 18 bzw. des darin eingestellten Getränkebehälters 22, die vom Benutzer eingestellte Solltemperatur für den Getränkebehälter 22, das Erreichen der Solltemperatur durch den Getränkebehälter 22 und dergleichen angezeigt werden. Neben einer rein optischen Anzeige ist hier auch eine akustische Anzeige denkbar, die dem Benutzer beispielsweise durch ein Tonsignal auf das Erreichen der Solltemperatur aufmerksam macht.

Um die Temperatur des Getränkehalters 18 bzw. des darin eingestellten Getränkebehälters 22 auf die vom Benutzer gewünschte Solltemperatur zu regeln, kann zum Beispiel in der Bodenwandung 26 der Ausnehmung 20 ein Temperatursensor 29 zum Erfassen einer Temperatur des in der Ausnehmung 20 vorhandenen Getränkebehälters 22 vorgesehen sein.

In einer bevorzugten Ausgestaltung kann ferner eine Getränkebehältererfassungsvorrichtung 35 vorgesehen sein, die zum Beispiel ebenfalls in der Bodenwandung 26 der Ausnehmung 20 angeordnet ist, um die Existenz eines Getränkebehälters 22 in der Ausnehmung 20 des Getränkehalters 18 festzustellen. Durch diese Maßnahme kann zum Beispiel vermieden werden, dass der Getränkehalter 18 einen Temperiervorgang durchführt, wenn sich kein Getränkebehälter 22 in seiner Ausnehmung 20 befindet. Dies wiederum reduziert den Energiebedarf des Getränkebehälters 18.

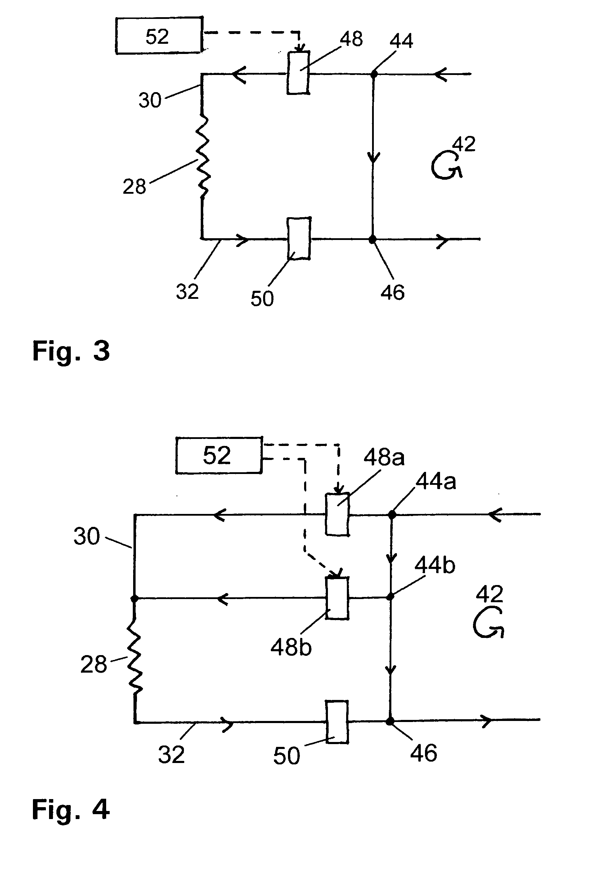

Bezug nehmend auf Fig. 3 bis 7 werden nun verschiedene Ausführungsformen näher beschrieben, in welcher Weise der in Fig. 2A und 2B dargestellte Getränkehalter 18 mit der Klimatisierungsanlage des Fahrzeugs gekoppelt werden kann.

In dem Ausführungsbeispiel von Fig. 3 ist der Getränkehalter 18 mit dem Kältemittelkreislauf 42 der Klimatisierungsanlage des Fahrzeugs gekoppelt.

Der Kältemittelkreislauf 42 weist hierzu eine Entnahmestelle 44 und eine Rückführstelle 46 auf. Die Zuleitung 30 des Medienkanals 28 ist mit der Entnahmestelle 44 des Kältemittelkreislaufs 42 verbunden. Die Ableitung 32 des Medienkanals 28 ist mit der Rückführstelle 46 des Kältemittelkreislaufs 42 verbunden.

In der Zuleitung 30 ist zwischen der Entnahmestelle 44 und dem Medienkanal 28 ein Regelventil 48 angeordnet, welches den Fluss des Kältemittels durch den Medienkanal 28 steuert. Das Regelventil 48 wird von einer Steuerung 52 angesteuert. In der Ableitung 32 ist zwischen dem Medienkanal 28 und der Rückführstelle 46 ein Rücksperrventil 50 vorgesehen, um ein Strömen des Kältemittels über die Ableitung 32 in den Medienkanal 28 zu verhindern.

Wahlweise kann das Regelventil 48 auch in die Entnahmestelle 44 integriert sein und/oder kann das Rücksperrventil 50 in die Rückführstelle 46 integriert sein.

Die Steuerung 52 ist einerseits mit der Bedieneinheit 36 des Getränkehalters 18 verbunden und vorzugsweise auch mit der Steuerung der Klimatisierungsanlage gekoppelt oder in diese integriert.

In diesem Ausführungsbeispiel ist das durch den Medienkanal 28 des Getränkehalters 18 strömende Wärmetauschmedium das Kältemittel aus dem Kältemittelkreislauf 42 der Klimatisierungsanlage des Fahrzeugs. Mit Hilfe des Kältemittels ist insbesondere ein Kühlvorgang zum Kühlen eines sich in der Ausnehmung 20 des Getränkehalters 18 befindenden Getränkebehälters 22 möglich.

Im Allgemeinen reicht die Strömungsgeschwindigkeit des Kältemittels im Kältemittelkreislauf 42 aus, damit das Kältemittel bei geöffnetem Regelventil 48 auch durch den Medienkanal 28 strömen kann. Wahlweise kann in die Zuleitung 30 oder in die Ableitung 32 des Medienkanals 28 aber auch eine geeignete Fluidpumpe eingesetzt werden, um das Kältemittel durch den Medienkanal 28 zu leiten. Diese Fluidpumpe kann ggf. auch die Funktion des Rücksperrventils 50 mit übernehmen, sodass auf diese Komponente dann verzichtet werden kann.

Auch in dem zweiten Ausführungsbeispiel von Fig. 4 ist der Getränkehalter 18 mit dem Kältemittelkreislauf 42 der Klimatisierungsanlage des Fahrzeugs gekoppelt. Gleiche Komponenten sind mit den gleichen Bezugsziffern wie im ersten Ausführungsbeispiel versehen.

Dieses Ausführungsbeispiel unterscheidet sich von der in Fig. 3 gezeigten Anordnung dadurch, dass das als Wärmetauschmedium für den Medienkanal 28 dienende Kältemittel dem Kältemittelkreislauf 42 der Klimatisierungsanlage wahlweise an zwei unterschiedlichen Stellen entnommen werden kann.

Hierzu weist der Kältemittelkreislauf 42 eine erste Entnahmestelle 44a, eine zweite Entnahmestelle 44b und eine Rückführstelle 46 auf. Die Zuleitung 30 des Medienkanals 28 ist mit der ersten Entnahmestelle 44a des Kältemittelkreislaufs 42 über ein erstes Regelventil 48a und mit der zweiten Entnahmestelle 44b des Kältemittelkreislaufs 42 über ein zweites Regelventil 48b verbunden. Die Ableitung 32 des Medienkanals 28 ist mit der Rückführstelle 46 des Kältemittelkreislaufs 42 verbunden.

Das erste und das zweite Regelventil 48a, 48b werden von einer Steuerung 52 angesteuert, um das Kältemittel wahlweise über die erste Entnahmestelle 44a und/oder die zweite Entnahmestelle 44b aus dem Kältemittelkreislauf 42 zu entnehmen. Da das Kältemittel an verschiedenen Stellen im Kältemittelkreislauf unterschiedliche Temperaturen besitzt, kann durch eine geeignete Wahl der Entnahmestellen 44a, 44b auf diese Weise die Temperatur des Wärmetauschmediums durch den Medienkanal 28 variiert werden. Dies führt wiederum dazu, dass der Temperiervorgang des Getränkehalters 18 optimiert und der Energiebedarf gesenkt werden können.

Weitere Merkmale, Vorteile und Abwandlungen dieses Ausführungsbeispiels entsprechen jenen des ersten Ausführungsbeispiels von Fig. 3.

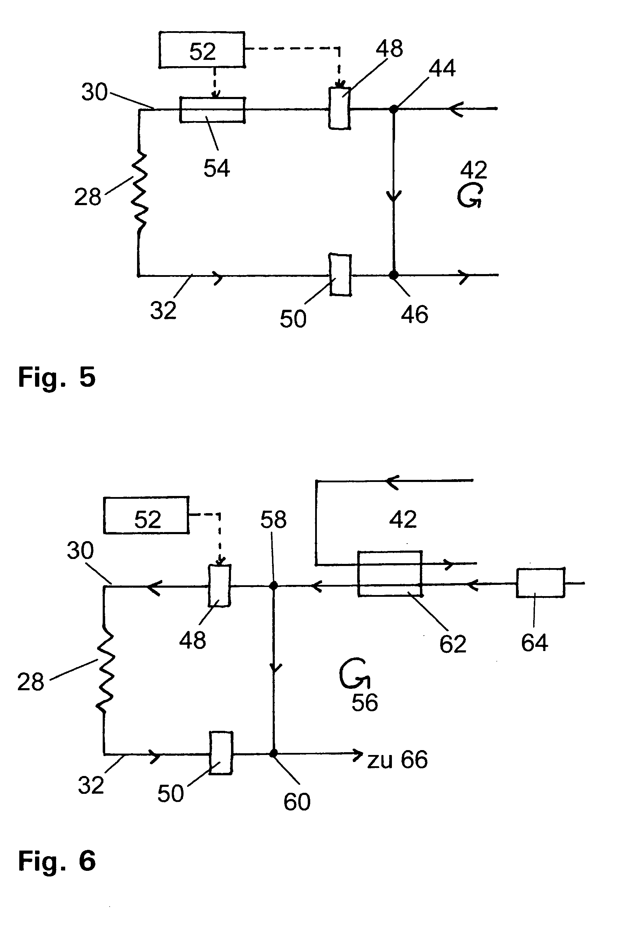

Fig. 5 zeigt ein drittes Ausführungsbeispiel. Auch in diesem Fall ist der Getränkehalter 18 mit dem Kältemittelkreislauf 42 der Klimatisierungsanlage des Fahrzeugs gekoppelt. Gleiche Komponenten sind wieder mit den gleichen Bezugsziffern wie im ersten Ausführungsbeispiel versehen.

Dieses Ausführungsbeispiel unterscheidet sich von der in Fig. 3 gezeigten Anordnung dadurch, dass in der Zuleitung 30 zwischen der Entnahmestelle 44 und dem Medienkanal 28 eine Heizvorrichtung 54 angeordnet ist. Die Heizvorrichtung 54 wird vorzugsweise ebenfalls von der Steuerung 52 angesteuert. Die Heizvorrichtung ist zum Beispiel stromab des Regelventils 48 angeordnet.

Mit der Heizvorrichtung 54 kann das Kältemittel aus dem Kältemittelkreislauf 42 bei Bedarf erwärmt werden, sodass der Getränkehalter 18 sowohl zum Kühlen als auch zum Heizen eines Getränkebehälters 22 benutzt werden kann.

Weitere Merkmale, Vorteile und Abwandlungen dieses Ausführungsbeispiels entsprechen jenen des ersten Ausführungsbeispiels von Fig. 3. Außerdem ist dieses Ausführungsbeispiel auch mit dem in Fig. 4 dargestellten Ausführungsbeispiel kombinierbar.

In dem vierten Ausführungsbeispiel von Fig. 6 ist der Getränkehalter 18 mit dem Klimaluftstrom 56 der Klimatisierungsanlage des Fahrzeugs gekoppelt.

Der Klimaluftstrom 56 weist in üblicher Weise ein Gebläse 64 und einen wenigstens Wärmetauscher 62 zum Temperieren des Luftstroms auf. Der in Fig. 6 gezeigte Wärmetauscher 62 ist mit dem Kältemittelkreislauf 42 gekoppelt, um den Klimaluftstrom zu kühlen. Darüber hinaus ist in dem Klimaluftstrom 56 zumeist auch eine Heizvorrichtung zum Erwärmen des Luftstroms vorgesehen.

In dem Klimaluftstrom 56 sind eine Entnahmestelle 58 und eine Rückführstelle 60 vorgesehen. Die Zuleitung 30 des Medienkanals 28 ist mit der Entnahmestelle 58 des Klimaluftstroms 56 verbunden. Die Ableitung 32 des Medienkanals 28 ist mit der Rückführstelle 60 des Klimaluftstroms 56 verbunden.

In der Zuleitung 30 ist zwischen der Entnahmestelle 58 und dem Medienkanal 28 ein Regelventil 48 angeordnet, welches den Luftstrom durch den Medienkanal 28 steuert. Das Regelventil 48 wird von einer Steuerung 52 angesteuert. In der Ableitung 32 ist zwischen dem Medienkanal 28 und der Rückführstelle 60 ein Rücksperrventil 50 vorgesehen, um ein Rückströmen der Klimaluft über die Ableitung 32 in den Medienkanal 28 zu verhindern. Stromab der Rückführstelle 60 wird die Klimaluft dann in bekannter Weise verschiedenen Luftauslässen 66 im Fahrgastraum 10 zugeleitet.

Analog zur Kopplung des Getränkehalters 18 mit dem Kältemittelkreislauf 42 kann auch in diesem Fall das Regelventil 48 in die Entnahmestelle 58 integriert sein und/oder kann das Rücksperrventil 50 in die Rückführstelle 60 integriert sein.

Die Steuerung 52 ist einerseits mit der Bedieneinheit 36 des Getränkehalters 18 verbunden und vorzugsweise auch mit der Steuerung der Klimatisierungsanlage gekoppelt oder in diese integriert.

In diesem Ausführungsbeispiel ist das durch den Medienkanal 28 des Getränkehalters 18 strömende Wärmetauschmedium die klimatisierte Luft aus dem Klimaluftstrom 56 der Klimatisierungsanlage des Fahrzeugs. Mit Hilfe der Klimaluft ist je nach deren Temperatur ein Kühlvorgang oder ein Heizvorgang zum Temperieren eines sich in der Ausnehmung 20 des Getränkehalters 18 befindenden Getränkebehälters 22 möglich.

Im Allgemeinen reicht die Strömungsgeschwindigkeit des Klimaluftstroms 56 aus, damit die Klimaluft bei geöffnetem Regelventil 48 auch durch den Medienkanal 28 strömen kann. Wahlweise kann in die Zuleitung 30 oder in die Ableitung 32 des Medienkanals 28 aber auch eine geeignete Pumpvorrichtung eingesetzt werden, um die Klimaluft durch den Medienkanal 28 zu leiten. Diese Pumpe kann ggf. auch die Funktion des Rücksperrventils 50 mit übernehmen, sodass auf diese Komponente dann verzichtet werden kann.

Dieses Ausführungsbeispiel kann ferner auch mit einem oder mehreren Merkmalen der in Fig. 4 und 5 dargestellten Ausführungsformen (verschiedene Entnahmestellen der Klimaluft, zusätzliche Heizvorrichtung in der Zuleitung) kombiniert werden.

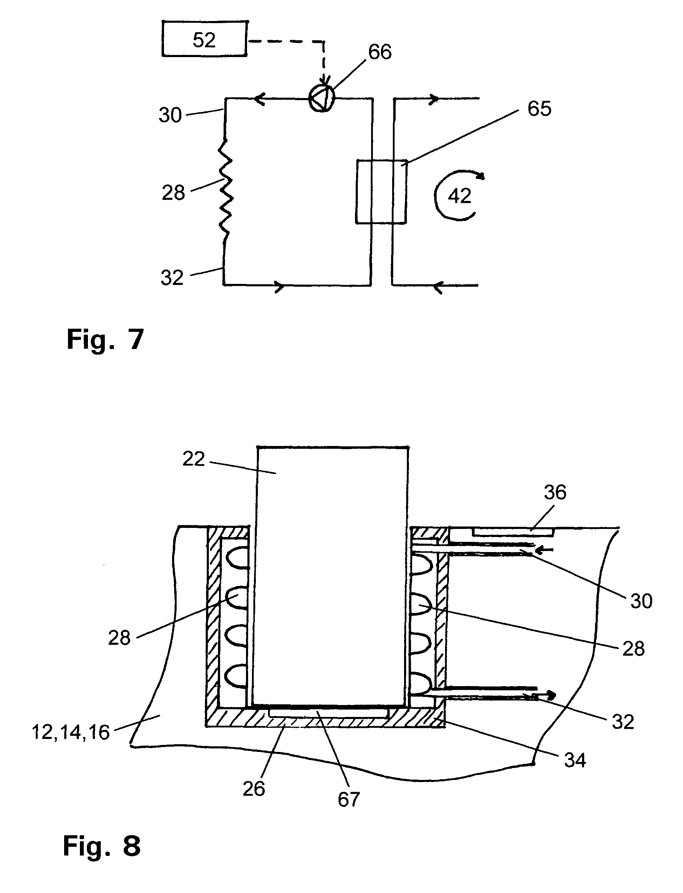

In Fig. 7 ist ein weiteres Ausführungsbeispiel eines Getränkehalters 18 veranschaulicht. Gleiche Bauteile sind mit den gleichen Bezugsziffern wie in den vorherigen Ausführungsbeispielen gekennzeichnet.

In diesem Ausführungsbeispiel sind die Zuleitung 30 und die Ableitung 32 des Medienkanals 28 miteinander verbunden, sodass das Wärmetauschmedium in einem geschlossenen Kreislauf strömt. Das Wärmetauschmedium kann in diesem Fall zum Beispiel eine Flüssigkeit wie Wasser sein.

Im dem geschlossenen Kreislauf ist zum Beispiel in der Zuleitung 30 oder in der Ableitung 32 eine entsprechende Fluidpumpe 66 angeordnet, um das Wärmetauschfluid durch den Medienkanal 28 zu pumpen. Die Fluidpumpe 66 wird von einer Steuerung 52 angesteuert, die vorzugsweise mit der Bedieneinheit 36 des Getränkehalters 18 verbunden ist.

Wie in Fig. 7 dargestellt, enthält der Kreislauf des Wärmetauschfluids ferner eine Wärmetauschvorrichtung 65, welche mit dem Kältemittelkreislauf 42 der Klimatisierungsanlage des Fahrzeugs gekoppelt ist. Alternativ kann die Wärmetauschvorrichtung 65 auch mit dem Klimaluftstrom 56 der Klimatisierungsanlage gekoppelt sein. Die Wärmetauschvorrichtung 65 kann dabei als Parallelstromwärmetauscher wie in Fig. 7 oder als Gegenstromwärmetauscher ausgebildet bzw. eingebaut sein.

Das Wärmetauschfluid wird einerseits durch die Wärmetauschvorrichtung 65 temperiert und steht andererseits im Medienkanal 28 mit dem Getränkebehälter 22 in der Ausnehmung in Wärmeaustausch.

Analog zur Ausführungsform von Fig. 5 kann bei Bedarf eine zusätzliche Heizvorrichtung 54 für das Wärmetauschfluid vorgesehen sein.

Anhand von Fig. 8 wird nun eine weitere Ausgestaltungsmöglichkeit eines Getränkehalters 18 näher beschrieben. Dabei sind gleiche Komponenten mit den gleichen Bezugsziffern wie in Fig. 2A gekennzeichnet und auf eine wiederholte Beschreibung davon wird verzichtet.

Bei dem Getränkehalter 18 von Fig. 8 ist in der Bodenwandung 26 der Ausnehmung 20 zusätzlich eine elektrische Heizvorrichtung 67 angeordnet. In Kombination mit einem kühlenden Wärmetauschmedium kann so ein sich in der Ausnehmung befindender Getränkebehälter 22 auf eine beliebige Solltemperatur temperiert werden. Die Position der Heizvorrichtung 67 ist natürlich nicht nur auf die Darstellung von Fig. 8 und insbesondere nicht nur auf die Bodenwandung 26 beschränkt.

Obwohl in Fig. 8 nicht dargestellt, können auch bei diesem Getränkehalter 18 eine Temperaturerfassungsvorrichtung 29 und/oder eine Getränkebehältererfassungsvorrichtung 35 vorgesehen sein.

Der Getränkehalter von Fig. 8 ist insbesondere auch in den Varianten gemäß Fig. 3, 4, 6 und 7 und deren Abwandlungen mit der Klimatisierungsanlage des Fahrzeugs koppelbar. Bezüglich der Ausführungsform von Fig. 5 wird die Funktion der dort in der Zuleitung 30 vorgesehenen Heizvorrichtung 54 nun durch die elektrische Heizvorrichtung 67 in der Bodenwandung 26 des Getränkehalters 18 übernommen.

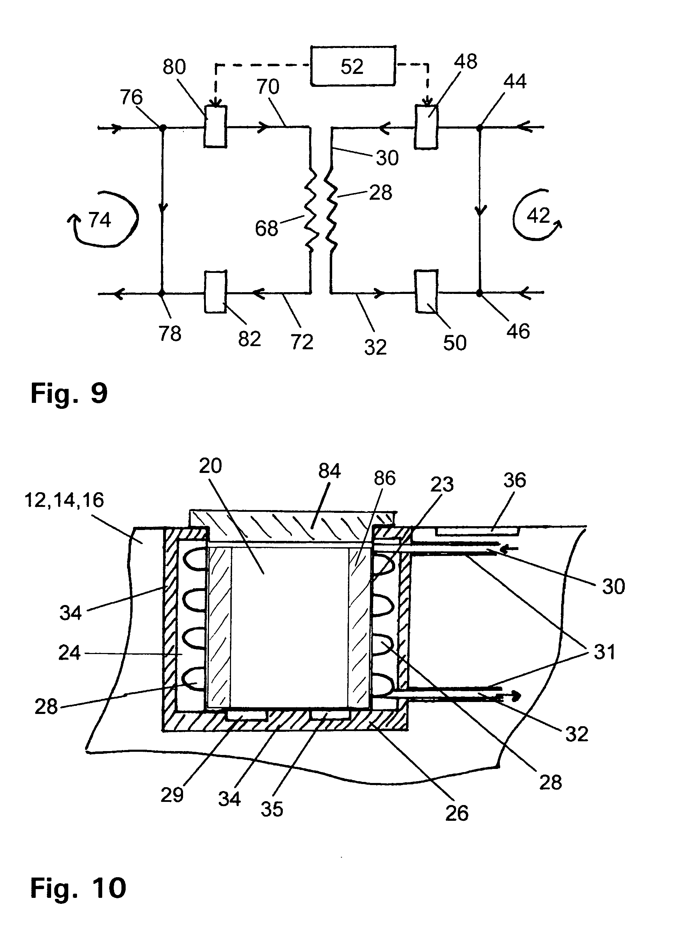

Eine weitere Ausführungsform eines Getränkehalters 18 gemäß der Erfindung wird nun unter Bezug auf Fig. 9 in mehr Einzelheiten erläutert. Dabei sind gleiche Komponenten wieder mit den gleichen Bezugsziffern wie in den vorherigen Ausführungsbeispielen gekennzeichnet.

Der Getränkehalter 18 von Fig. 9 unterscheidet sich von allen oben beschriebenen Ausführungsformen dadurch, dass er nicht einen Medienkanal 28, sondern zwei Medienkanäle 28 und 68 aufweist, die voneinander getrennt sind und von verschiedenen Wärmetauschmedien durchströmt werden können.

Der erste Medienkanal 28 dient zum Beispiel zum Kühlen eines Getränkebehälters 22 und ist mit dem Kältemittelkreislauf 42 der Klimatisierungsanlage des Fahrzeugs gekoppelt (rechte Seite in Fig. 9). Für diese Kopplung 28 des ersten Medienkanals 28 mit der Klimatisierungsanlage des Fahrzeugs sind grundsätzlich alle Varianten aus den Fig. 3 bis 8 und deren Abwandlungen möglich.

Der zweite Medienkanal 68 dient zum Beispiel zum Heizen eines Getränkebehälters 18 in der Ausnehmung 20 des Getränkehalters 18. Analog zum ersten Medienkanal 28 ist er mit einer Zuleitung 70 und einer Ableitung 72 verbunden. In der Zuleitung 70 ist ein Regelventil 80 angeordnet und in der Ableitung 72 ist ein Rücksperrventil 82 angeordnet.

In dem Beispiel von Fig. 9 ist die Zuleitung 70 des zweiten Medienkanals 68 mit einer Entnahmestelle 76 eines Kühlwasserkreislaufs 74 des Fahrzeugmotors verbunden und ist die Ableitung 72 mit einer Rückführstelle 78 des Kühlwasserkreislaufs 74 verbunden. Anstelle des Kühlwasserkreislaufs 74 kann auch hier der Kältemittelkreislauf 42 oder der Klimaluftstrom 56 verwendet werden, sofern das Wärmetauschmedium dort mit einer anderen Temperatur als für den ersten Medienkanal 28 abgezweigt wird.

Auch für die Anbindung des zweiten Medienkanals 68 sind die gleichen Varianten und Abwandlungen denkbar, wie sie oben anhand der Fig. 3 bis 8 beschrieben worden sind.

Die beiden Medienkanäle 28, 68 können nur einzeln oder auch beide gleichzeitig von dem jeweiligen Wärmetauschmedium durchströmt werden.

Die beiden Medienkanäle 28, 68 können zum Beispiel beide spiralförmig verlaufend in der Seitenwandung 24 ausgebildet sein. Alternativ kann der eine Medienkanal 28, 68 in der Seitenwandung 24 und der andere Medienkanal 68, 28 in der Bodenwandung 26 vorgesehen sein.

Fig. 10 zeigt eine noch weitere Ausgestaltungsmöglichkeit eines Getränkehalters 18 der Erfindung. Dabei sind gleiche Komponenten mit den gleichen Bezugsziffern wie in Fig. 2A gekennzeichnet und auf eine wiederholte Beschreibung davon wird verzichtet.

Der Getränkehalter 18 von Fig. 10 weist gemäß einer ersten weiteren Variante zusätzlich einen Deckel 84 zum Verschließen der Ausnehmung 20 auf. Dieser Deckel 84 ist wärmeisolierend ausgebildet, sodass die Temperatur im Innern der Ausnehmung 20 auch ohne Zuführen weiterer Wärmeenergie durch den Medienkanal 28 über einen möglichst langen Zeitraum erhalten bleibt.

Diese Variante des Getränkehalters 18 ist in vorteilhafter Weise zum Beispiel zum Aufbewahren von Lebensmitteln, Getränken, Arzneimitteln oder dergleichen geeignet, die über einen längeren Zeitraum auf einer bestimmten Temperatur gehalten werden sollen. So können beispielsweise auch auf längeren Reisen Arzneimittel kühl gelagert werden.

Der Getränkehalter 18 mit Deckel 84 ist natürlich auch auf alle anderen Ausführungsbeispiele der Figuren 2 bis 9 übertragbar.

Bei einer noch weiteren Variante, die in Fig. 10 veranschaulicht ist, kann in die Ausnehmung 20 des Getränkehalters 18 ein im Wesentlichen hohlzylindrischer Einsatz 86 eingesetzt werden.

Der Einsatz 86 ist aus einem wärmeleitenden Material gebildet. Sein Außendurchmesser entspricht im Wesentlichen dem Innendurchmesser der Ausnehmung 20 bzw. der Seitenwandung und sein Innendurchmesser entspricht im Wesentlichen der Größe eines kleineren Getränkebehälters 22 (z.B. einer Energydrink-Dose im Vergleich zu einer 0,33 I - Getränkedose).

Mit Hilfe eines solchen Einsatzes 86 kann der Getränkehalter 18 auch zum Temperieren kleinerer Getränkebehälter 22 genutzt werden, für die aufgrund der direkten thermischen Kopplung zum Medienkanal ein nahezu verlustfreier Übertrag der thermischen Energie erzielt wird.

Auch der Getränkehalter 18 mit Einsatz 86 ist natürlich ebenso auf alle anderen Ausführungsbeispiele der Figuren 2 bis 9 übertragbar.

### BEZUGSZIFFERNLISTE

- 10: Fahrgastraum
- 12: Armaturenbrett
- 14: Mittelkonsole
- 16: Türinnenverkleidung
- 18: Getränkehalter
- 20: Ausnehmung
- 22: Getränkebehälter
- 24: Seitenwandung
- 26: Bodenwandung
- 28: Medienkanal, erster Medienkanal
- 29: Temperaturerfassungsvorrichtung
- 30: Zuleitung
- 31: Wärmedämmung für 30, 32
- 32: Ableitung
- 33: Innenseite
- 34: Wärmedämmung für 24, 26
- 35: Getränkebehältererfassungsvorrichtung
- 36: Bedieneinheit
- 38: Betriebsanzeige
- 39: Eingabeelement
- 40: Temperaturanzeige
- 42: Kältemittelkreislauf
- 44: Entnahmestelle
- 44a: erste Entnahmestelle
- 44b: zweite Entnahmestelle
- 46: Rückführstelle
- 48: Regelventil
- 48a: erstes Regelventil
- 48b: zweites Regelventil
- 50: Rücksperrventil
- 52: Steuerung
- 54: Heizvorrichtung
- 56: Klimaluftstrom
- 58: Entnahmestelle
- 60: Rückführstelle
- 62: Wärmetauscher
- 64: Gebläsevorrichtung
- 65: Wärmetauscher
- 66: Fluidpumpe
- 67: Heizvorrichtung
- 68: zweiter Medienkanal
- 70: Zuleitung
- 72: Ableitung
- 74: Kühlwasserkreis
- 76: Entnahmestelle
- 78: Rückführstelle
- 80: Regelventil
- 82: Rücksperrventil
- 84: Deckel
- 86: Einsatz

## Patentansprüche

1. Fahrzeug, mit einer Klimatisierungsanlage zum Klimatisieren eines Fahrgastraums (10) des Fahrzeugs und wenigstens einem in der Innenverkleidung (12-16) des Fahrgastraums (10) integrierten Getränkehalter (18) mit einer durch eine Seitenwandung (24) und eine Bodenwandung (26) begrenzten Ausnehmung (20), in welcher ein Standardgetränkebehälter (22) zumindest teilweise aufgenommen werden kann,
**dadurch gekennzeichnet, dass**
in der Seitenwandung (24) und/oder der Bodenwandung (26) des Getränkehalters (18) ein im Wesentlichen spiral- oder schneckenförmig verlaufender Medienkanal (28) ausgebildet ist;
eine Innenseite (23) des Getränkehalters (18) zumindest teilweise aus einem wärmeleitenden Material gebildet ist und eine der Innenseite (18) abgewandte Seite des Getränkehalters zumindest teilweise wärmeisolierend (34) ausgebildet ist;
ein Ende des Medienkanals (28) mit einer Zuleitung (30) zum Zuführen eines Wärmetauschmediums zu dem Medienkanal verbunden ist und ein anderes Ende des Medienkanals (28) mit einer Ableitung (32) zum Abführen des Wärmetauschmediums aus dem Medienkanal verbunden ist;
eine Steuervorrichtung (48; 48a, 48b; 66; 80) zum Steuern des Flusses des Wärmetauschmediums durch den Medienkanal (28) vorgesehen ist; und
die Zuleitung (30) und die Ableitung (32) mit der Klimatisierungsanlage des Fahrzeugs gekoppelt sind.

2. Fahrzeug nach Anspruch 1,
**dadurch gekennzeichnet, dass**
das Wärmetauschmedium ein Kältemittel eines Kältemittelkreislaufs (42) der Klimatisierungsanlage des Fahrzeugs ist.

3. Fahrzeug nach Anspruch 1,
**dadurch gekennzeichnet, dass**
das Wärmetauschmedium ein durch die Klimatisierungsanlage des Fahrzeugs temperiertes Fluid ist.

4. Fahrzeug nach Anspruch 1,
**dadurch gekennzeichnet, dass**
in Strömungsrichtung des Wärmetauschmediums zwischen der Zuleitung (30) und der Ableitung (32) ein Wärmetauscher (65) vorgesehen ist, der mit der Klimatisierungsanlage des Fahrzeugs gekoppelt ist; und
das Wärmetauschmedium ein Fluid ist, welches in einem geschlossenen Kreislauf bestehend aus der Zuleitung (30), dem Medienkanal (28), der Ableitung (32) und dem Wärmetauscher (65) strömt.

5. Fahrzeug nach einem der vorhergehenden Ansprüche,
**dadurch gekennzeichnet, dass**
der Getränkehalter (18) mit einem ersten Medienkanal (28) für ein kühlendes Wärmetauschmedium und einem zweiten Medienkanal (68) für ein heizendes Wärmetauschmedium versehen ist; und
die Steuervorrichtung (48, 80) zum Steuern des Flusses des kühlenden Wärmetauschmediums durch den ersten Medienkanal (28) und zum Steuern des Flusses des heizenden Wärmetauschmediums durch den zweiten Medienkanal (68) ausgebildet ist.

6. Fahrzeug nach einem der vorhergehenden Ansprüche,
**dadurch gekennzeichnet, dass**
der Getränkehalter (18) mit einer Bedieneinheit (36) versehen ist, welche wenigstens ein Eingabeelement zum Eingeben einer Solltemperatur für einen in der Ausnehmung (20) des Getränkehalters (18) aufgenommenen Getränkebehälter (22) aufweist.

7. Fahrzeug nach einem der vorhergehenden Ansprüche,
**dadurch gekennzeichnet, dass**
der Getränkehalter (18) mit einer Temperaturerfassungsvorrichtung (29) zum Erfassen einer Temperatur eines in der Ausnehmung (20) aufgenommenen Getränkebehälters (22) versehen ist.

8. Fahrzeug nach einem der vorhergehenden Ansprüche,
**dadurch gekennzeichnet, dass**
der Getränkehalter (18) mit einer Getränkebehältererfassungsvorrichtung (35) zum Erfassen eines Vorhandenseins eines Getränkebehälters (22) in der Ausnehmung (20) des Getränkehalters (18) versehen ist.

9. Fahrzeug nach einem der vorhergehenden Ansprüche,
**dadurch gekennzeichnet, dass**
der Getränkehalter (18) mit einer Bedieneinheit (36) versehen ist, welche wenigstens ein Anzeigeelement (40) zum Anzeigen einer Isttemperatur eines Getränkebehälters (22) in der Ausnehmung (20), einer Solltemperatur für einen Getränkebehälter (22) in der Ausnehmung (20) und/oder eines Erreichens einer Solltemperatur durch einen Getränkebehälter (22) in der Ausnehmung (20) aufweist.

10. Fahrzeug nach einem der vorhergehenden Ansprüche,
**dadurch gekennzeichnet, dass**
in der Zuleitung (30) eine Heizvorrichtung (54) zum Heizen des Wärmetauschmediums angeordnet ist.

11. Fahrzeug nach einem der vorhergehenden Ansprüche,
**dadurch gekennzeichnet, dass**
der Getränkehalter (18) mit einer elektrischen Heizvorrichtung (67) versehen ist.

12. Fahrzeug nach einem der vorhergehenden Ansprüche,
**dadurch gekennzeichnet, dass**
der Getränkehalter (18) mit einer Bedieneinheit (36) versehen ist, welche wenigstens eine Betriebsanzeige (38) zum Anzeigen eines aktuellen Betriebszustandes des Getränkehalters (18) aufweist.

13. Fahrzeug nach einem der vorhergehenden Ansprüche,
**dadurch gekennzeichnet, dass**
die Zuleitung (30) und/oder die Ableitung (32) wärmeisoliert (31) ausgebildet sind.

14. Fahrzeug nach einem der vorhergehenden Ansprüche,
**dadurch gekennzeichnet, dass**
der Getränkehalter (18) einen Einsatz (86) aus einem wärmeleitenden Material aufweist, der in die Ausnehmung (20) einsetzbar ist, um den Innenraum zum Aufnehmen eines zu temperierenden Getränkebehälters (22) zu verkleinern.

15. Fahrzeug nach einem der vorhergehenden Ansprüche,
**dadurch gekennzeichnet, dass**
der Getränkehalter (18) eine Verschlussvorrichtung (84) zum Verschließen der Ausnehmung (20) aufweist, die wärmeisolierend ausgebildet ist.
